# EUROPEAN PATENT APPLICATION

(11) **EP 4 600 165 A1**
(43) Date of publication of application: **13.08.2025**
(21) Application number: 25155998.5
(22) Date of filing: 05.02.2025
(51) Int. Cl.: B65B 19/04, B65B 19/10, B65B 35/40, B65B 59/00, B65B 59/02, B65G 47/08, B65G 47/18

(54) **DEVICE FOR FEEDING A GROUP OF SMOKING ARTICLES, MANUFACTURING MACHINE FOR PRODUCING PACKS FOR SMOKING ARTICLES AND METHOD FOR OPERATING SAID FEEDING DEVICE**

(30) Priority: 09.02.2024 IT 202400002764
(71) Applicant: G.D S.p.A., 40133 Bologna (IT)
(72) Inventor: SARTI, Stefano, 40133 Bologna (IT); MECCAGNI, Mattia, 40133 Bologna (IT)
(74) Representative: Studio Torta S.p.A.

(57) **Abstract**

A feeding device (4) for feeding a group (1) of smoking articles (2) is described, comprising a plurality of rows of smoking articles (2) on top of one another. The feeding device (4) is provided with a collecting hopper (5) for collecting the smoking articles (2) and having a single output mouth (6), from which the group (1) of smoking articles (2) is cyclically extracted; and an extraction device (7) designed to convey the group (1) of smoking articles (2) coming from the single output mouth (6) with at least two pushing elements (10), which are independent of one another and movable from a retracted position to an advanced position and vice versa; when the pushing elements (10) are in the advanced position they prevent the smoking articles (2) coming from the hopper (5) from moving downwards. A first pushing element (10*) is designed to convey an upper sub-group (3*) of smoking articles (2) and is arranged near the output mouth (6); and a second pushing element (10**) is arranged under the first pushing element (10*), is configured to convey a lower sub-group (3**) of smoking articles (2) and is configured to move from the retracted position to the advanced position simultaneously; with the first pushing element (10*) and to move from the advanced position to the retracted position only after the start of the movement of the first pushing element (10*) from the respective advanced position to the respective retracted position.

## Description

### CROSS-REFERENCE TO RELATED APPLICATIONS

This patent application claims priority from Italian patent application no. 102024000002764 filed on February 9, 2024 the entire disclosure of which is incorporated herein by reference.

### TECHNICAL FIELD

This invention relates to a feeding device for a group of smoking articles, a manufacturing machine for producing packs of smoking articles, and a method for operating said feeding device.

In particular, this invention finds advantageous application in feeding groups of smoking articles, in which the group of smoking articles have a particular arrangement (also known as collation).

### PRIOR ART

Smoking articles are typically sold in packs with a parallelepiped shape and within which the group of smoking articles is contained evenly divided over several rows. Typically, the packs are obtained by means of packaging machines that include, in an initial section, at least one feeding device for the group of smoking articles. The feeding device comprises a hopper for collecting smoking articles, which has a vertical extension and is equipped with at least one outlet mouth from which the groups of smoking articles are extracted successively by means of a corresponding extraction device.

The extraction device is coupled to the outlet mouth and is designed to cyclically extract the group of smoking articles from the outlet mouth and insert it into a corresponding pocket of a stationary formation conveyor in front of the outlet mouth. The extraction device then comprises a single pushing element that moves from a retracted position to an advanced position (and vice versa) and has an arm to which an appendage is attached that is designed to come into contact with the smoking articles and accompany them into the pocket. The pushing element is designed in such a way that it prevents the smoking articles coming from the hopper when it is in the advanced position.

The method of operating the feeding device described so far thus involves an initial step, in which the pushing element is in the retracted position; an intermediate step, in which the pushing element moves to reach the advanced position and transfer the group of smoking articles into the pocket; and a final step in which the pushing element moves to return to the retracted position and allow a new group of smoking articles to descend. Once the group of smoking articles has been placed in the pocket, it continues its conventional packaging process.

For example, US4061234 describes a device for feeding a group of smoking articles comprising multiple rows of smoking articles on top of one another; the device is provided with multiple pushing elements connected to a common support and moving simultaneously in a manner depending on the support. US4362235 also describes a feeding device for a group of smoking articles comprising multiple rows of smoking articles on top of one another; the feeding device is in turn provided with multiple pushing elements arranged side-by-side and configured to extract the smoking articles from respective and separate outlet mouths of a hopper.

However, the method described above has the drawback that, as the number of overlapping rows of smoking articles increases (e.g. when the group of smoking articles comprises seven or more overlapping rows of smoking articles), the final step is very unstable. It frequently happens that during its descent, the group of smoking articles breaks up, flooding the feeding device.

### DESCRIPTION OF THE INVENTION

The aim of this invention is to provide a device for feeding a group of smoking articles that is free of the drawbacks of the state of the art and, at the same time, is easy and inexpensive to manufacture.

Another purpose of this invention is to provide a method for operating a feeding device for a group of smoking articles that is free of the drawbacks of the state of the art and, at the same time, is easy and inexpensive to implement.

Another purpose of this invention is to provide a manufacturing machine for producing packs of smoking articles that is free of the drawbacks of the state of the art and, at the same time, is easy and inexpensive to manufacture.

In accordance with this invention, a device for feeding a group of smoking articles, a manufacturing machine for producing packs for smoking articles, and a method for operating said feeding device are provided as claimed in the appended claims.

### BRIEF DESCRIPTION OF THE DRAWINGS

This invention will now be described with reference to the accompanying drawings, which illustrate some non-limiting embodiments thereof, in which:
- Figure 1 is a schematic front view of a group of smoking articles that can be obtained using the feeding device produced in accordance with this invention;
- Figures 2 to 5 are schematic side views with parts removed for clarity of a feeding device produced in accordance with this invention in four different operating modes.

### PREFERRED EMBODIMENTS OF THE INVENTION

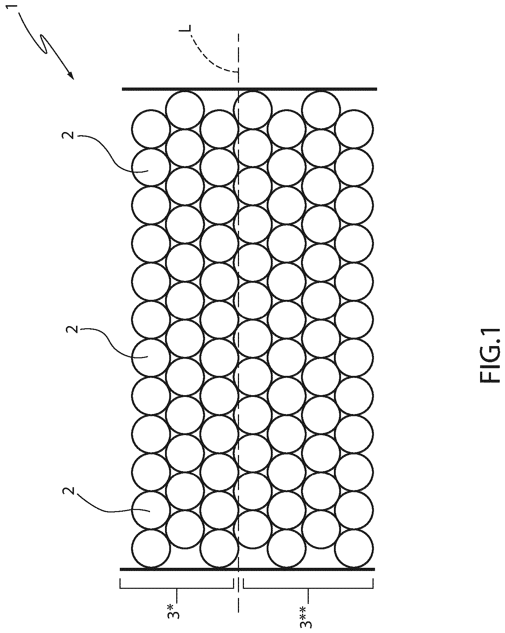

In Figure 1, reference number 1 globally denotes a group of smoking articles 2 that is configured to be subsequently wrapped in an inner wrapper (not illustrated) and to be housed inside a cigarette packet (not illustrated).

In the following discussion, the term "smoking articles" is used to refer to rod-shaped articles from the tobacco sector. In particular, and without loss of generality, these include (merely by way of example): cigarettes, cigars, cigarillos, electronic cigarettes or ecigs, ancillary products such as filters, refills for ecigs, and other tobacco-based products or tobacco alternatives or substitutes.

In other words, the term *"smoking articles"* means articles of any kind pertaining to this sector, e.g. traditional cigarettes or "heat-not-burn" (HNB) articles that only involve heating and not burning the article itself. The term *"smoking articles"* also refers to cartridges containing liquid or powder substances intended for use in electronic cigarettes or other devices that allow them to be heated to generate aerosols.

As illustrated, the group 1 comprises a given number of rows of smoking articles 2, the rows being arranged on top of one another. Advantageously, the smoking articles 2 of the group 1 are arranged in a staggered manner. Therefore, the smoking articles 2 of the group 1 may be arranged in at least two rows of smoking articles 2 that are on top of one another and staggered so that each smoking article 2 of a row is in contact with one or two corresponding smoking articles 2 of the upper row and/or is in contact with one or two corresponding smoking articles 2 of the lower row.

Alternatively, the smoking articles 2 of the group 1 are stacked. In other words, the smoking articles 2 of the group 1 are arranged in at least two rows of smoking articles 2 that are on top of one another and aligned so that each smoking article 2 of a row is in contact with just one corresponding smoking article 2 of the upper row and/or is in contact with just one corresponding smoking article 2 of the lower row.

Advantageously, the group 1 comprises multiple rows of smoking articles 2 on top of one another. According to a preferred embodiment, the group 1 comprises ten or fewer rows of smoking articles 2 on top of one another. As illustrated in Figure 1, the group 1 preferably comprises seven rows of smoking articles 2 on top of one another.

The group 1 is ideally divided into a number of sub-groups 3. Advantageously, the group 1 is ideally subdivided into two sub-groups indicated by 3* and 3** in Figure 1. The joining of all the sub-groups 3*, 3** defines the group 1. In Figure 1, the division plane of the two sub-groups 3*, 3** has been schematically illustrated with the imaginary line L. Each sub-group 3, 3* comprises a given number of rows of smoking articles 2, the rows being arranged on top of one another. Each sub-group 3, 3* comprises at least a row of smoking articles 2, the rows being arranged on top of one another. Each sub-group 3*, 3** comprises four or fewer rows of smoking articles 2 on top of one another. Advantageously, the sub-groups 3*, 3** have the same number of rows of smoking articles 2, the rows being arranged on top of one another.

As illustrated in Figure 1, the sub-group 3* comprises three rows of smoking articles 2 on top of one another and the sub-group 3** comprises four rows of smoking articles 2 on top of one another.

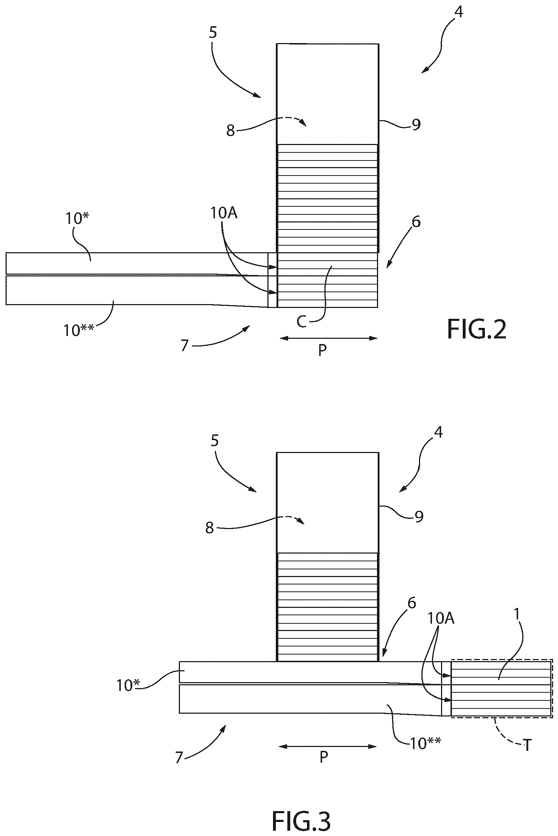

In Figures 2 to 5, a device 4 for feeding a group of smoking articles that defines the initial section of a packaging machine for smoking articles 2 is illustrated as a whole.

The feeding device 4 comprises a hopper 5 that has a vertical extension and is equipped with at least one outlet mouth 6 from which the groups 1 of smoking articles 2 are extracted successively by means of a corresponding extraction device 7. Advantageously, the hopper 5 is provided with a single outlet mouth 6 from which the groups 1 of smoking articles 2 are extracted successively by means of the extraction device 7.

The hopper 5 is delimited at the rear by a vertical wall 8 and at the front by a front covering panel 9 (partially visible in Figures 2 to 5); the front covering panel 9 is preferably transparent and provided with a flap so that a hopper 5 operator can access the inside of the hopper 5.

Advantageously, the hopper 5 comprises multiple dividing elements and/or partitions (not illustrated) defining channels within which the smoking articles are arranged in essentially vertical stacks.

The extraction device 7 is coupled to the outlet mouth 6 and is designed to cyclically extract the group 1 of smoking articles 2 from the outlet mouth 6 and insert it into a corresponding pocket T of a stationary formation conveyor in front of the outlet mouth 6. More specifically, the extraction device 7 is designed to convey the group 1 of smoking articles 2 along a direction P from the outlet mouth 6 into the corresponding pocket T. More specifically, the extraction device 7 comprises an airlock C, formed below the outlet mouth 6 and designed to house the group 1 of smoking articles 2 that are subsequently fed inside the pocket T by means of the pushing elements 10.

In fact, the extraction device 7 comprises multiple pushing elements 10 independent of each other that can move along the direction P from a retracted position to an advanced position, and vice versa from the advanced position to the retracted position. Advantageously, the extraction device 7 comprises at least two pushing elements 10 independent of each other that can move along the direction P from a retracted position to an advanced position, and vice versa from the advanced position to the retracted position.

According to a preferred embodiment, the extraction device 7 comprises a number of pushing elements 10 equal to the number of sub-groups 3, in which the pushing elements 10 are independent of each other and can move along the direction P from a retracted position to an advanced position, and vice versa from the advanced position to the retracted position. Each pushing element 10*, 10** is connected to a respective sub-group 3*, 3**.

Each pushing element 10 comprises an arm to which an appendage is attached that is designed to contact the smoking articles 2 and accompany them into the pocket T. Said appendage preferably has an essentially flat front surface 10A with one dimension that is equal to the dimension of the respective sub-group 3*, 3**.

The pushing elements 10 are designed in such a way that they do not occupy the airlock C, which can be filled with smoking articles 2 from the hopper 5, in the retracted position. In other words, when the pushing elements 10 are in the retracted position, the pushing elements 10 do not prevent the descent of the smoking articles 2 into the hopper 5 and, subsequently, the filling of the airlock C.

The pushing elements 10 are also designed in such a way that they occupy the airlock C in the advanced position, which cannot therefore be filled with smoking articles 2 from the hopper 5. In other words, when the pushing elements 10 are in the advanced position, the descent of the smoking articles 2 into the hopper 5 and, subsequently, the filling of the airlock C are blocked by the presence of the pushing elements 10.

More specifically, the extraction device 7 comprises a (first) upper pushing element 10* made to advance the upper sub-group 3* of smoking articles 2 along the direction P. The upper pushing element 10* is arranged near the outlet mouth 6; in particular, the upper pushing element 10* is arranged immediately below the outlet mouth 6.

The extraction device 7 also comprises a (second) lower pushing element 10** made to advance the lower sub-group 3** of smoking articles 2. The lower pushing element 10** is arranged below the upper pushing element 10*.

The two pushing elements 10*, 10** are made independent of each other and can move along the direction P from the retracted position to the advanced position, and vice versa. More specifically, the two pushing elements 10*, 10** are designed to move simultaneously along the direction P from the retracted position to the advanced position. The two pushing elements 10*, 10** are also designed not to move simultaneously along the direction P from the advanced position to the retracted position. More specifically, at first the pushing element 10* begins to move along the direction P from the advanced position to the retracted position, and only subsequently does the pushing element 10** also begin to move along the direction P from the advanced position to the retracted position.

According to a preferred embodiment, the lower pushing element 10** is configured in such a way that the front surface 10A" is located further to the right of a centre of gravity G of the smoking articles 2 at the moment when the smoking articles 2 occupy the space vacated by the upper pushing element 10*. The centre of gravity G is a representative parameter for smoking articles 2 that is established during a preliminary step of fine-tuning and setting the feeding device 4.

Alternatively, the lower pushing element 10** is configured to completely close the outlet mouth 6 when the smoking articles 2 occupy the space vacated by the upper pushing element 10*; in particular, the lower pushing element 10** is configured so that the front surface 10A' completely closes the outlet mouth 6 when the smoking articles 2 occupy the space vacated by the upper pushing element 10*.

According to an additional variant, the lower pushing element 10** is configured to move from the advanced position to the retracted position only after the upper pushing element 10* has reached the retracted position. That is, once the advanced position is reached, the upper pushing element 10* moves along the direction P to reach the retracted position before the lower pushing element 10**.

It is important to emphasise that the fall of the smoking articles 2 begins when the front surface 10A of the upper pushing element 10* is further to the left of the centre of gravity G.

It is also important to emphasise that when the upper pushing element 10* is in the retracted position and the smoking articles 2 fall occupying the space vacated by the upper pushing element 10*, the lower pushing element 10** is in a position to provide support for the fall of the smoking articles 2 (advantageously, this position is not necessarily the advanced position).

It is important to note that, when the upper pushing element 10* is in the retracted position and the lower pushing element 10** is in the advanced position, the descent of the smoking articles 2 is not impeded and the smoking articles 2 partially fill the airlock C and occupy the space vacated by the upper pushing element 10* by resting on the lower pushing element 10**. In other words, the lower pushing element 10** supports the stack of smoking articles 2.

Then, when the lower pushing element 10** is also in the retracted position, the smoking articles 2 completely fill the airlock C so as to occupy the space vacated by the lower pushing element 10** as well.

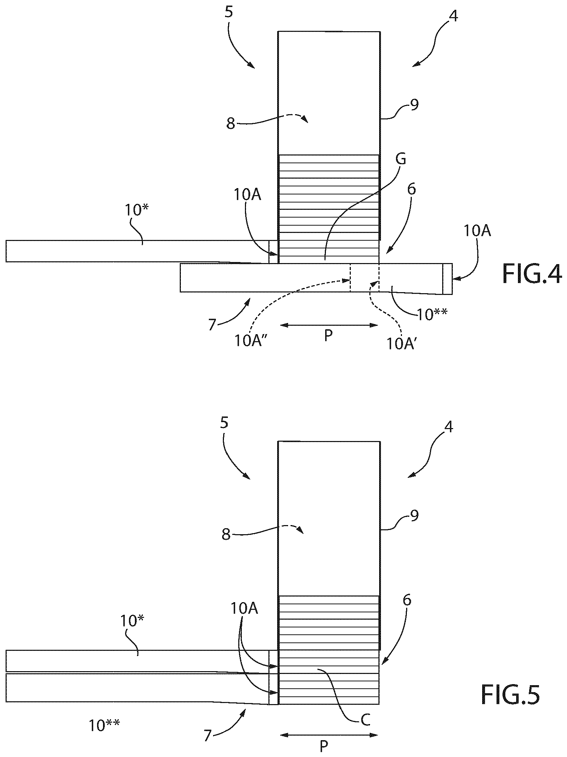

The steps of the method for operating the feeding device 4 described in the above discussion are described below. In particular, the method involves:
- an initial step illustrated in Figure 2, in which both the upper pushing element 10* and the lower pushing element 10** are in the retracted position and the group 1 of smoking articles 2 completely fills the airlock C;
- a second step illustrated in Figure 3, in which both the upper pushing element 10* and the lower pushing element 10** have moved along the direction P and reached the advanced position; the group 1 of smoking articles 2 has been transferred to the pocket T and the two pushing elements 10 support the mass of smoking articles 2 contained in the hopper 5;
- a third step illustrated in Figure 4, in which the upper pushing element 10* begins to move in the direction P from the advanced position to the retracted position; the fall of the smoking articles 2 exiting the hopper 5 begins when the front surface 10A of the upper pushing element 10* is further to the left of the centre of gravity G, the smoking articles 2 partially fill the airlock C to occupy the space vacated by the upper pushing element 10* while the lower pushing element 10** provides support for the smoking articles 2; and
- a fourth step following the third step, in which the lower pushing element 10** begins to move along the direction P from the advanced position to the retracted position (following the beginning of the movement of the upper pushing element 10* from the advanced position to the retracted position);
- a fifth step illustrated in Figure 5, in which both pushing elements 10 have reached the retracted position and the group 1 of smoking articles 2 completely fills the airlock C.

Once the group 1 of smoking articles 2 has been placed in the pocket, the group 1 of smoking articles 2 continues its conventional packaging process.

In the preceding discussion, explicit reference was made to the case in which the extraction device 7 comprises two pushing elements 10*, 10**, each of which is connected with a respective sub-group 3*, 3**, but the extraction device 7 can advantageously be applied with any number of pushing elements 10. For example, an intermediate pushing device 10 may be provided, interposed between the upper pushing element 10* and the lower pushing element 10**; in this case, the group 1 of smoking articles 2 is ideally divided into three sub-groups 3, each connected with a respective pushing element 10.

The device 4 and the method for operating it described so far have a number of advantages. Firstly, the feeding device 4 is easy and inexpensive to implement. Secondly, the use of multiple pushing elements 10 in the extraction device 7 makes it possible to drastically reduce the possibility that the group 1 of smoking articles 2 descending from the hopper 5 to the airlock C will break up, flooding the feeding device 4 itself.

### REFERENCE NUMBER LIST FOR FIGURES

- 1: group
- 2: smoking articles
- 3, 3*, 3**: sub-groups
- 4: feeding device
- 5: hopper
- 6: outlet mouth
- 7: extraction device
- 8: vertical wall
- 9: covering panel
- 10, 10*, 10**: pushing element
- 10A, 10A',10A": front surface
- L: imaginary line
- P: direction
- C: airlock
- T: pocket
- G: centre of gravity

## Claims

1. A feeding device (4) for feeding a group (1) of smoking articles (2) comprising a plurality of rows of smoking articles (2) on top of one another; the feeding device (4) comprises:
- a collecting hopper (5) for collecting the smoking articles (2) and having a single output mouth (6), from which the group (1) of smoking articles (2) is cyclically extracted; and
- an extraction device (7) designed to convey, along a direction (P), the group (1) of smoking articles (2) coming from the single output mouth (6) and comprising at least two pushing elements (10), which are arranged one on top of the other at the single output mouth (6) and are movable from a retracted position to an advanced position and vice versa independently of one another; the pushing elements (10) are configured to prevent the smoking articles (2) coming from the hopper (5) from moving downwards through the single output mouth (6) when they are in the advanced position;
- wherein a first pushing element (10*) is designed to convey a first sub-group (3*) of smoking articles (2) and is arranged below the single output mouth (6); and a second pushing element (10**) is arranged under the first pushing element (10*) and is configured to convey a second sub-group (3**) of smoking articles (2); and wherein the first and second pushing elements (10*, 10**) are configured to move from the retracted position to the advanced position simultaneously; and the second pushing element (10**) is configured to move from the advanced position to the retracted position only after the beginning of the movement of the first pushing element (10*) from the advanced position to the retracted position.

2. The device according to claim 1, wherein the second pushing element (10**) is provided with a front surface (10A"); said front surface (10A") is configured so as to be located on the right of a centre of gravity (G) of the smoking articles (2) when the smoking articles (2) occupy the space left free by the first pushing element (10*).

3. The device according to claim 1, wherein the second pushing element (10**) is provided with a front surface (10A'); said front surface (10A') is configured to close the single output mouth (6) when the smoking articles (2) occupy the space left free by the first pushing element (10*).

4. The device according to claim 1, wherein the second pushing element (10**) is configured to move from the advanced position to the retracted position only after the first pushing element (10*) has reached the retracted position.

5. The device according to any one of the preceding claims, wherein each pushing element (10*, 10**) is configured to convey a respective sub-group (3*, 3**) comprising a plurality of rows of smoking articles (2) on top of one another.

6. The device according to any one of the preceding claims, wherein each pushing element (10*, 10**) is configured to convey a respective sub-group (3*, 3**) comprising a number of rows of smoking articles (2) on top of one another, which is four or less.

7. The device according to any one of the preceding claims, wherein the pushing elements (10*, 10**) are configured to convey respective sub-groups (3*, 3**) having the same number of rows of smoking articles (2) on top of one another.

8. The device according to any one of the preceding claims, wherein the group (1) of smoking articles (2) comprises a number of rows of smoking articles (2) on top of one another, which is ten or less.

9. A manufacturing machine for producing packs of smoking articles (2) comprising a number of feeding devices (4) according to any one of the claims from 1 to 8.

10. A method for operating a feeding device (4) for feeding a group (1) of smoking articles (2) comprising a plurality of rows of smoking articles (2) on top of one another according to any one of the claims from 1 to 8, comprising the following steps:
- simultaneously moving the first and the second pushing elements (10*, 10**) from the retracted position to the projecting position along a direction (P) so as to transfer the group (1) of smoking articles (2);
- starting to move the first pushing element (10*) from the projecting position to the retracted position; and
- after having started to move the first pushing element (10*), also moving the second pushing element (10**) from the projecting position to the retracted position.
